# EUROPÄISCHE PATENTSCHRIFT

(11) **EP 3 809 218 B1**
(45) Veröffentlichungstag und Bekanntmachung des Hinweises auf die Patenterteilung: **02.11.2022**
(21) Anmeldenummer: 20196791.6
(22) Anmeldetag: 18.09.2020
(51) Int. Cl.: G05B 19/418, G06F 16/36

(54) **FERTIGUNGSSTEUERUNGSSYSTEM**
PRODUCTION CONTROL SYSTEM
SYSTÈME DE COMMANDE DE FABRICATION

(30) Priorität: 17.10.2019 DE 102019128104
(43) Veröffentlichungstag der Anmeldung: 21.04.2021
(73) Patentinhaber: MHP Management- und IT-Beratung GmbH, 71638 Ludwigsburg (DE)
(72) Erfinder: Junginger, Markus, 73087 Bad Boll (DE); Hofmann, Ralf, 74080 Heilbronn (DE)
(74) Vertreter: Ruckh, Rainer Gerhard

(56) Entgegenhaltungen:
- DE-A1- 10 308 725
- DE-A1-102016 224 457
- WAN JIAFU ET AL: "An Ontology-Based Resource Reconfiguration Method for Manufacturing Cyber-Physical Systems", IEEE / ASME TRANSACTIONS ON MECHATRONICS, IEEE SERVICE CENTER, PISCATAWAY, NJ, US, Bd. 23, Nr. 6, 1. Dezember 2018 (2018-12-01), Seiten 2537-2546, XP011699835, ISSN: 1083-4435, DOI: 10.1109/TMECH.2018.2814784 [gefunden am 2018-12-12]

## Beschreibung

Die Erfindung betrifft ein Fertigungssteuerungssystem.

Derartige Fertigungssteuerungssysteme dienen generell zur Steuerung von Fertigungseinrichtungen, die zur Fertigung unterschiedlichster Produkte dienen können. Der Begriff Fertigungseinrichtungen umfasst hierbei auch komplette Fertigungsanlagen, das heißt Fabriken.

In modernen Fertigungsanlagen, insbesondere Fabriken sind Fertigungsprozesse und Logistikabläufe weitestgehend automatisiert. Moderne Fabriken, sogenannte smart factories, sind in flexible Fertigungszellen untergliedert, wobei die Logistikprozesse, insbesondere zum Materialtransport zwischen den Fertigungszellen von autonom fahrenden Fahrzeugen, insbesondere FTS (fahrerlose Transportfahrzeuge), übernommen werden.

Um optimierte Fertigungsabläufe zu erhalten ist es bekannt, derartige verteilte Einheiten über übergeordnete Steuerungen zu steuern. Damit lassen sich zwar Optimierungen wie die Vermeidung von Stillstandzeiten von FTS oder Verbesserungen der Auslastungen einzelner Fertigungszellen erzielen.

Ein wesentliches Problem besteht jedoch darin, dass die einzelnen Einheiten herstellerspezifische Module mit proprietären Datenmodellen ausbilden.

So werden beispielsweise in der Produktentwicklung Produktdaten von zu produzierenden Teilen in Datenmodellen generiert, die sich von den Datenmodellen der Fertigungszellen, in welchen diese Teile zum Beispiel zur Durchführung von Montageschritten benötigt werden, unterscheiden. Auch die Datenmodelle zum Betrieb von Logistikeinheiten wie zum Beispiel FTS, sind wiederum unterschiedlich ausgebildet.

Dies erschwert eine Abstimmung der einzelnen Einheiten der Fertigungseinrichtung beziehungsweise Fabrik. Insbesondere ist dadurch eine Automatisierung und Optimierung von Abläufen in der Fertigungseinrichtung erschwert.

Prinzipiell können diese Probleme dadurch entschärft werden, dass geeignete Schnittstellen zwischen den einzelnen Einheiten vorgesehen werden, um eine Datenkonversion oder dergleichen durchzuführen. Dies bedeutet jedoch einen erheblichen konstruktiven Mehraufwand, insbesondere auch deshalb, da die Festigungseinrichtung eine Vielzahl von herstellerspezifischen Modulen mit einzelnen, unterschiedlichen proprietären Datenmodellen aufweist, was unterschiedliche Schnittstellen auf Systemebene erforderlich macht.

In WAN JIAFU ET AL:"An Ontology-Based Resource Reconfiguration Method for Manufacturing Cyber-Physikal Systems", IEEE/ASME TRANSACTIONS ON MECHATRONICS, IEEE SERVICE CENTER, PISCATAWAY, NJ, US, Bd. 23, Nr. 6, 1. Dezember 2018 (2018-12-01), Seiten 2537-2546, XP011699835, ISSN: 1083-4435, DOI: 10.1109/TMECH.2018.2814784 ist eine ontologie-basierte Resourcen Rekonfiguration für cyber-physikalische Systeme im Bereich Fertigung beschrieben. Mittels Ontologien werden Fertigungs-Resourcen beschrieben und auf Modell-Instanzen abgebildet. Mit den Ontologien werden Beziehungen zwischen Fertigungskonzepten erläutert.

Die DE 10 2016 224 457 A1 betrifft ein Verfahren zur Prüfung, ob und/oder wie ein technischer Vorgang mittels eines technischen Systems mit mehreren Einheiten (CPPU) mit je für den technischen Vorgang potentiell relevanten technischen Fähigkeiten (SKI) umsetzbar ist, bei welchem - mindestens eine Ontologie (ONT), welche das technische System (TES) sowie den technischen Vorgang beschreibt, herangezogen wird, und - mithilfe der mindestens einen Ontologie (ONT) ein Constraint-Satisfaction-Problem (CSP) gebildet wird und - Lösungen des Constraint-Satisfaction-Problems (CSP) gesucht und vorzugsweise buchgehalten und/oder ausgegeben werden.

Die DE 103 08 725 A1 betrifft ein System und Verfahren zur Verwaltung und zum Austausch von Daten, ein technisches Projekt, eine technische Anlage oder einzelne Anlagenkomponenten betreffend, insbesondere ein Automatisierungsprojekt betreffend, welche eine Datenverarbeitungsanlage mit Konvertierungseinrichtung zum Konvertieren von Daten aus wenigstens einem proprietären Datenformat in ein standardisiertes Datenformat und/oder umgekehrt aufweist. Die Konvertierungseinrichtung umfasst eine Komponente mit Mitteln zur Datenzuweisung, durch welche mittels wenigstens einer Datenzuweisung wenigstens einer in einem standardisierten Datenformat angegebenen zweiten Information mindestens eine in einem proprietären Format angegebene erste Information zugewiesen ist und/oder umgekehrt. Weiterhin umfasst die Konvertierungseinrichtung eine generische Komponente mit Mitteln, die für wenigstens eine in einem proprietären Datenformat angegebene erste Information aus der Menge der vorhandenen Datenzuweisungen die entsprechende, ihr zugeordnete Datenzuweisung sucht und aufspürt sowie mittels der zugeordneten Datenzuweisung die jeweilige proprietäre erste Information in eine in der zugeordneten Datenzuweisung spezifizierte, standardisierte zweite Information umwandelt und die für wenigstens eine standardisierte zweite Information in den in der Konvertierungseinrichtung enthaltenden Datenzuweisungen in der zweiten Information zugeordnete Datenzuweisung sucht und aufspürt und mittels der zugeordneten Datenzuweisung die standardisierte zweite Information in eine in der Datenzuweisung spezifizierte proprietäre erste Information umwandelt.

Der Erfindung liegt die Aufgabe zugrunde ein Fertigungssteuerungssystem der eingangs genannten Art bereitzustellen, welches eine einfache, flexible Architektur und gleichzeitig eine hohe Funktionalität aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Fertigungssteuerungssystem mit einer Anordnung von herstellerspezifischen Modulen, umfassend Module zur Steuerung von Fertigungseinheiten, Module zur Steuerung von Logistikeinheiten und/oder Module zur Bereitstellung und/oder Verarbeitung von Produktdaten. Das Fertigungssteuerungssystem weist wenigstens eine Ontologieeinheit auf, über welche proprietäre Datenmodelle der herstellerspezifischen Module verknüpft sind. Als Einzel-Ontologieeinheiten sind eine Ontologieeinheit in Form einer Ressourcen-Einheit welche zur Generierung von Fertigungsabläufen definierenden Daten ausgebildet ist, eine Ontologieeinheit in Form einer Prozess-Einheit, welche zur Programmierung von Fertigungs- und/oder Logistikeinheiten ausgebildet ist, und eine Ontologieeinheit in Form einer Produkt-Einheit, welche zur Verarbeitung von Produktdaten ausgebildet ist, vorgesehen. Als Ontologieeinheit ist eine übergeordnete Ontologieeinheit vorgesehen, welche eine Steuerlogik für die Einzel-Ontologieeinheit ausbildet.

Die Erfindung betrifft weiterhin ein Verfahren zur Fertigungssteuerung.

Mittels der erfindungsgemäßen Ontologieeinheit erfolgt eine semantische Vernetzung aller verschiedenen proprietären Datenmodelle von einzelnen Einheiten einer Fertigungseinrichtung wie zum Beispiel einer kompletten Fabrik.

Damit wird ein durchgehender Austausch von Informationen zwischen allen proprietären Datenmodellen ermöglicht, ohne dass auf Systemebene einzelne Schnittstellen vorgesehen werden müssen. Die mit der Ontologieeinheit erzielte semantische Vernetzung ermöglicht vielmehr eine Abbildung der Datenmodelle in einem übergreifenden digitalen Modell, einen sogenannten digitalen Zwilling, mittels denen ohne zusätzlichen Hardwareaufwand auf Systemebene ein bidirektionaler harmonisierter Datenstrom zwischen allen Einheiten einer Fertigungseinrichtung ermöglicht wird. Hierbei können insbesondere völlig unterschiedliche proprietäre Datenmodelle aus den Bereichen Produktentwicklung, Fertigung und Logistik vernetzt werden.

Gemäß einer vorteilhaften Ausgestaltung der Erfindung sind in der Ontologieeinheit Ontologien bildende Klassenstrukturen vorgegeben, die hierarchisch oder in Verbänden strukturierte Klassen aufweisen, mittels derer eine semantische Vernetzung der proprietären Datenmodelle durchführbar ist.

Vorteilhaft erfolgt die Klassifizierung mittels Metamodellen, die in Ontologie-Bibliotheken strukturiert sind.

Mit diesen Ontologien ist vorteilhaft die semantische Vernetzung der proprietären Datenmodelle konfigurierbar.

Damit kann ein flexibles Datenmapping aller proprietären Datenmodelle durchgeführt werden.

Eine mögliche Ausführungsform für eine semantische Vernetzung unterschiedlicher proprietärer Datenmodelle besteht darin, dass die Ontologieeinheit eine vorgegebene Anzahl von Inferenzeinheiten aufweist, mittels derer Klassen von Ontologien verknüpfbar sind.

Dabei bilden die Inferenzeinheiten Schnittstelleneinheiten für unterschiedliche proprietäre Datenmodelle aus.

Die Funktionsweise eines solchen Systems ist derart, dass die Daten der proprietären Datenmodelle innerhalb mehrerer Objektmodelle strukturiert sind. Derartige Ontologien bildende Objektmodelle weisen Klassenstrukturen auf, die hierarchisch oder in Verbänden strukturierte Klassen aufweisen, wobei den Klassen vorzugsweise mehrere Attribute zugeordnet sind, die innerhalb einer Klassenstruktur weitervererbt sind. Für den Zugriff auf abgespeicherte Daten weist die Ontologie eine vorgegebene Anzahl von Regeln auf, die Inferenzeinheiten zugeordnet sind. Mittels der Regeln können Attribute wenigstens einer Klassenstruktur und/oder Klassen wenigstens einer Klassenstruktur sowie auch abgespeicherte Daten miteinander verknüpft werden. Dabei stellen die Regeln die logischen Verknüpfungsvorschriften dar, die die einzelnen vorgenannten Elemente in vorgegebener Weise miteinander in Beziehung setzen. In den Inferenzeinheiten wird eine Auswertung vorgenommen, indem diesen Regeln konkrete Werte für die Attribute, Klassen und/oder Daten zugeordnet werden, wodurch bestimmte Ausgangsgrößen generiert werden.

Die Inferenzeinheiten bilden Schnittstelleneinheiten zwischen den unterschiedlichen proprietären Datenmodellen aus.

Die den Inferenzeinheiten zugeordneten Regeln übersetzen die Strukturen des Objektmodells eines ersten Datenmodells in das Objektmodell des zweiten Datenmodells. Dadurch ist bei einem Transfer von Daten von einem zum anderen Datenmodell stets eine definierte Zuordnung der übertragenen Daten gewährleistet.

Gemäß einer vorteilhaften Ausgestaltung sind die Ontologien mittels Standardprotokollen beschrieben.

Insbesondere wird als Standardprotokoll ein RDF (Resource Description Framework) eingesetzt.

Durch den Einsatz derartiger Industriestandards können die Ontologieeinheiten auf offene Bibliotheken erweitert werden.

Die erfindungsgemäße Ontologiestruktur ist dadurch gekennzeichnet, dass eine Ontologieeinheit in Form einer Ressourcen-Einheit vorgesehen ist, welche zur Generierung von Fertigungsabläufen definierenden Daten ausgebildet ist.

Weiterhin ist eine Ontologieeinheit in Form einer Prozess-Einheit vorgesehen, welche zur Programmierung von Fertigungs- und/oder Logistikeinheiten ausgebildet ist.

Weiterhin ist eine Ontologieeinheit in Form einer Produkt-Einheit vorgesehen, welche zur Verarbeitung von Produktdaten ausgebildet ist.

Für diese Einzel-Ontologieeinheiten ist eine übergeordnete Ontologieeinheit vorgesehen, welche eine Steuerlogik für diese Einzel-Ontologieeinheit bildet.

Mit den Ressourcen-Einheiten, Prozess-Einheiten und Produkt-Einheiten können alle relevanten Prozesse einer Fertigungseinheit abgebildet werden, die über die übergeordnete Ontologieeinheit koordiniert werden.

Mit den Ontologieeinheiten erfolgt eine vollständige Virtualisierung aller physischen und digitalen Komponenten einer Fertigungseinrichtung. Um für diese Komponenten ausführbare Anweisungen zu generieren, ist diesen Ontologieeinheiten vorteilhaft eine Normalisierungsschicht zugeordnet.

Gemäß einer vorteilhaften Ausführungsform der Erfindung sind selbstlernende Regelwerke vorgesehen.

Damit können an sich bekannte Machine Learning Verfahren genutzt werden, mittels derer insbesondere Rückschlüsse auf Veränderungen der gesamten Fertigungseinrichtung erhalten werden und bestehende Prozesse, insbesondere Fertigungs- und Logistikprozesse optimiert werden können. Das gesamte Fertigungssteuerungssystem bildet damit ein geschlossenes, regelbares System. Insbesondere wird eine kontinuierliche Anpassung der Datenströme über den gesamten Produktlebenszyklus der zu fertigenden Produkte erzielt.

Gemäß einer weiteren vorteilhaften Ausgestaltung ist das erfindungsgemäße Fertigungssteuerungssystem in ein Cloud-Rechnernetzwerk eingebunden.

Die Optimierung des Fertigungssteuerungssystems ist damit nicht auf lokale Machine Learning Verfahren begrenzt, sondern auf gegebenenfalls weltweit vernetzte Systeme erweiterbar.

Die Erfindung wird im Folgenden anhand der Zeichnung erläutert. Es zeigt:

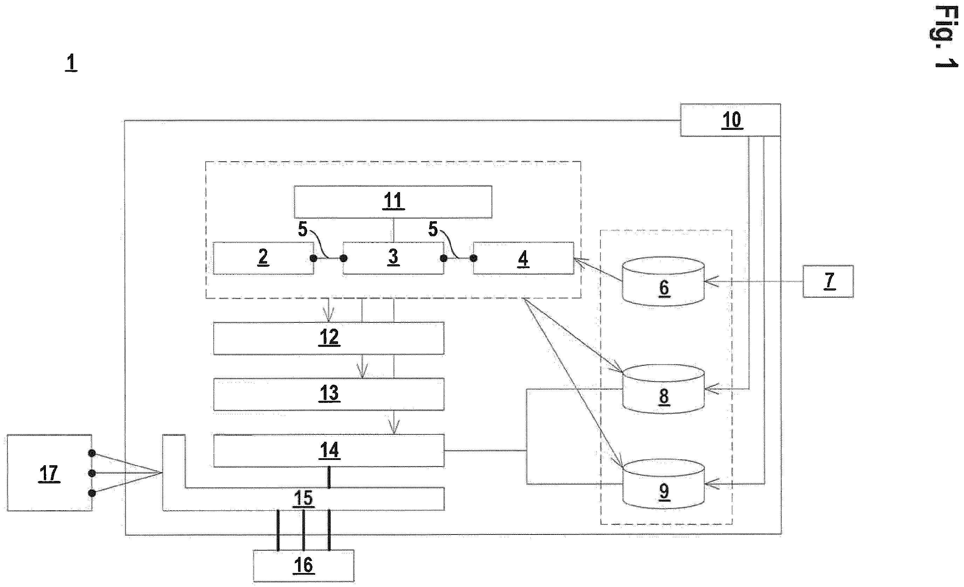

- Figur 1:: Blockdiagramm eines Ausführungsbeispiels des erfindungsgemäßen Fertigungssteuerungssystems.

Figur 1 zeigt ein Ausführungsbeispiel des erfindungsgemäßen Fertigungssteuerungssystems 1. Das Fertigungssteuerungssystem 1 dient zur Steuerung von Fertigungsprozessen und Logistikprozessen in einer Fertigungseinrichtung. Im vorliegenden Fall ist die Fertigungseinrichtung als sogenannte smart factory ausgebildet, in welcher eine Anordnung von Fertigungszellen und mehrere autonom fahrende Fahrzeuge, insbesondere FTS (fahrerlose Transportsysteme) vorgesehen sind. In den einzelnen Fertigungszellen werden unterschiedliche Fertigungsbeziehungsweise Montageprozesse durchgeführt. Mit den autonom fahrenden Fahrzeugen werden Logistikprozesse durchgeführt. Insbesondere werden mit FTS Materialien, zu fertigende Teile oder montierte Baueinheiten transportiert.

Die Fertigungseinheit kann insbesondere zur Fertigung von Kraftfahrzeugen dienen.

Erfindungsgemäß weist das Fertigungssteuerungssystem 1 eine Anordnung von Ontologieeinheiten auf, mittels derer proprietäre Datenmodelle von herstellerspezifischen Fertigungszellen, Logistikeinheiten und auch produktentwicklungsspezifischen Daten und Prozessen semantisch vernetzt werden.

Dabei sind generell in einer Ontologieeinheit Ontologien bildende Klassenstrukturen vorgegeben, die hierarchisch oder in Verbänden strukturierte Klassen aufweisen, mittels derer eine semantische Vernetzung der proprietären Datenmodelle durchführbar ist.

Zweckmäßig ist die semantische Vernetzung der proprietären Datenmodelle konfigurierbar.

Vorteilhaft sind die Ontologien mittels Standardprotokollen beschrieben.

Insbesondere wird als Standardprotokoll ein RDF (Resource Description Framework) eingesetzt.

Wie Figur 1 zeigt sind als Ontologieeinheiten eine Ressourcen-Einheit 2, eine Prozess-Einheit 3 und eine Produkt-Einheit 4, die von einer Steuerlogik 11 als übergeordnete Ontologieeinheit gesteuert werden, vorgesehen. Diese Ontologieeinheiten bilden ein virtuelles Modell der in der Fertigungseinrichtung ablaufenden Prozesse.

In den einzelnen Ontologieeinheiten sind Ontologien bildende Objektmodelle vorgesehen, die über geeignete ontologische Verknüpfungen 5, wie zum Beispiel Inferenzeinheiten miteinander verknüpft sind und somit eine semantische Vernetzung von in der Ressourcen-Einheit 2, der Prozess-Einheit 3 und der Produkt-Einheit 4 vorhandenen proprietären Datenmodellen bewerkstelligen.

In der Ressourcen-Einheit 2 werden über Ontologien Daten, die Fertigungsabläufe beschreiben und definieren, strukturiert und digital verfügbar gemacht. Die Daten bilden fertigungsspezifische proprietäre Datenmodelle aus, die über die Ontologien in einen harmonisierten Datenstrom, der über alle Einheiten der Fertigungseinrichtung fließen kann, eingebunden werden.

Zu den Fertigungsabläufen gehören allgemein nicht nur Fertigungsprozesse, sondern auch Logistikprozesse.

In der Prozess-Einheit 3 werden abhängig von Daten von proprietären Datenmodellen der Ressourcen-Einheit 2 und Produkt-Einheit 4 für Fertigungs- beziehungsweise Arbeitsmittel wie Roboter bestimmte Fertigungsprozesse in einem ausführbaren Programmcode (beispielsweise in einem SPS-Code) programmiert. Durch die Ontologien ist ein harmonisierter Datentransfer zwischen der Prozess-Einheit 3 und der Ressourcen-Einheit 2 und Produkt-Einheit 4 möglich, ohne dass hierfür auf Systemebene entsprechende Schnittstellen vorgesehen sein müssen.

In der Produkt-Einheit 4 werden Produktdaten 6 bereitgestellt und verfügbar gemacht. Wie Figur 1 zeigt werden abhängig von extern, kundenspezifisch vorgegebenen Produktspezifikationen 7 Produktdaten 6 in proprietären Datenmodellen, beispielsweise als CAD-Daten der Produkt-Einheit 4 zur Verfügung gestellt.

In der Produkt-Einheit 4 erfolgt eine Verarbeitung und Bereitstellung dieser Produktdaten 6. Insbesondere werden die Produktdaten 6 als Persistence-Daten 8 in einem Arbeitsspeicher als unveränderbarem Speichermittel bleibend, vorzugsweise nicht flüchtig abgespeichert.

Weiterhin werden mittels den Ontologien der Produkt-Einheit 4 aus den Produktdaten 6 digitale Modelle generiert, die als sogenannte digitale Zwillinge 9 abgespeichert werden.

Über eine Analyseeinheit 15 können die Persistence-Daten 8 und die digitalen Zwillinge 9 analysiert werden.

Die Ontologien aufweisenden Ressourcen-Einheit 2, Prozess-Einheit 3 und Produkt-Einheit 4 werden von einer übergeordneten Ontologieeinheit als Steuerlogik 11 gesteuert und koordiniert.

Insgesamt bilden die Ressourcen-Einheit 2, Prozess-Einheit 3, Produkt-Einheit 4 und die übergeordnete Ontologieeinheit ein Ontologiemodell, mit dem alle proprietären Datenmodelle der Fertigungseinheit semantisch vernetzt sind, sodass zwischen allen Einheiten der Fertigungseinheit ein standardisierter, harmonisierter Datenstrom aller Daten des Gesamtsystems erhalten wird, ohne dass hierfür mittels physikalischen Schnittstellen auf Systemebene eine Anpassung von zu übertragenden Daten notwendig wäre.

Die Ressourcen-Einheit 2 dient dabei zum Aufbereiten von proprietären Daten von Maschinenherstellern, die Arbeits- beziehungsweise Fertigungsmittel wie Bearbeitungsmaschinen und Logistikeinheiten wie FTS mit definierten Funktionalitäten liefern und bereitstellen.

Die Produkt-Einheit 4 dient zum Aufbereiten und Bereitstellen von kundenspezifischen proprietären Produktdaten 6.

Schließlich werden in der Prozess-Einheit 3 von Prozess-Designers ebenfalls proprietäre Daten generiert, indem dort ausführbare Programmcodes für Fertigungs- beziehungsweise Arbeitsmittel generiert werden.

Die in der Ressourcen-Einheit 2, der Prozess-Einheit 3 und der Produkt-Einheit 4 generierten Daten und Programme werden einer Validierungsschicht 12 und einer Programmierschicht 13 zugeführt.

In der Validierungsschicht 12 erfolgt eine Überprüfung und Validierung von erstelltem Programmcode. Insbesondere erfolgt eine Inbetriebnahme derart, dass geprüft wird, ob die programmierten Prozesse machbar, insbesondere kollisionsfrei sind.

Mit der Programmierschicht 13 erfolgt nach erfolgreicher Validierung eine Generierung von Maschinencodes für die Fertigungs- und Arbeitsmittel.

Als weiterer Bestandteil des erfindungsgemäßen Ontologiemodells ist eine Normalisierungsschicht 14 vorgesehen. Dort erfolgt eine Übersetzung von in Hochsprachen abgefasstem Programmcode in Anwender-Software wie einer SPS-Software.

Schließlich ist eine Adapterschicht 15 vorgesehen, die die Verbindung zu Kommunikationseinheiten 16 wie Mail, Internet und dergleichen herstellt. Weiterhin dient die Adapterschicht 15 zur Herstellung von Verbindungen mit externen Einheiten 17 von Zulieferern, Partnerfirmen und dergleichen.

### B ezugszei chenli ste

- (1): Fertigungssteuerungssystem
- (2): Ressourcen-Einheit
- (3): Prozess-Einheit
- (4): Produkt-Einheit
- (5): Verknüpfung
- (6): Produktdaten
- (7): Produktspezifikation
- (8): Persistence-Daten
- (9): Digitale Zwillinge
- (10): Analyseeinheit
- (11): Steuerlogik
- (12): Validierungsschicht
- (13): Programmierschicht
- (14): Normalisierungsschicht
- (15): Adapterschicht
- (16): Kommunikationseinheit
- (17): Externe Einheiten

## Patentansprüche

1. Fertigungssteuerungssystem (1) mit einer Anordnung von herstellerspezifischen Modulen, umfassend Module zur Steuerung von Fertigungseinheiten, Module zur Steuerung von Logistikeinheiten und/oder Module zur Bereitstellung und/oder Verarbeitung von Produktdaten (6), **dadurch gekennzeichnet, dass** das Fertigungssteuerungssystem wenigstens eine Ontologieeinheit aufweist, über welche proprietäre Datenmodelle der herstellerspezifischen Module verknüpft sind, dass als Einzel-Ontologieeinheiten eine Ontologieeinheit in Form einer Ressourcen-Einheit (2), welche zur Generierung von Fertigungsabläufen definierenden Daten ausgebildet ist, eine Ontologieeinheit in Form einer Prozess-Einheit (3), welche zur Programmierung von Fertigungs- und/oder Logistikeinheiten ausgebildet ist, und eine Ontologieeinheit in Form einer Produkt-Einheit (4), welche zur Verarbeitung von Produktdaten (6) ausgebildet ist, vorgesehen sind, und dass als Ontologieeinheit eine übergeordnete Ontologieeinheit vorgesehen ist, welche eine Steuerlogik (11) für die Einzel-Ontologieeinheiten ausbildet.

2. Fertigungssteuerungssystem (1) nach Anspruch 1, **dadurch gekennzeichnet, dass** in der Ontologieeinheit Ontologien bildende Klassenstrukturen vorgesehen sind, die hierarchisch oder in Verbänden strukturierte Klassen aufweisen, mittels derer eine semantische Vernetzung der proprietären Datenmodelle durchführbar ist.

3. Fertigungssteuerungssystem (1) nach Anspruch 2, **dadurch gekennzeichnet, dass** die semantische Vernetzung der proprietären Datenmodelle konfigurierbar ist.

4. Fertigungssteuerungssystem (1) nach einem der Ansprüche 2 oder 3, **dadurch gekennzeichnet, dass** die Ontologieeinheit eine vorgegebene Anzahl von Inferenzeinheiten aufweist, mittels derer Klassen von Ontologien verknüpfbar sind.

5. Fertigungssteuerungssystem (1) nach Anspruch 4, **dadurch gekennzeichnet, dass** die Inferenzeinheiten Schnittstelleneinheiten für unterschiedliche proprietäre Datenmodelle ausbilden.

6. Fertigungssteuerungssystem (1) nach einem der Ansprüche 2 bis 5, **dadurch gekennzeichnet, dass** die Ontologien mittels eines Standardprotokolls in Form eines RDF (Resource Description Framework) beschrieben sind.

7. Fertigungssteuerungssystem (1) nach einem der Ansprüche 1 bis 6, **dadurch gekennzeichnet, dass** eine Normalisierungsschicht (14) vorgesehen ist, in welcher aus Daten von Ontologieeinheiten ausführbare Anweisungen generiert werden.

8. Fertigungssteuerungssystem (1) nach einem der Ansprüche 1 bis 7, **dadurch gekennzeichnet, dass** dieses in ein Cloud-Rechnernetzwerk eingebunden ist.

9. Verfahren zur Fertigungssteuerung mit einer Anordnung von herstellerspezifischen Modulen, umfassend Module zur Steuerung von Fertigungseinheiten, Module zur Steuerung von Logistikeinheiten und/oder Module zur Bereitstellung und/oder Verarbeitung von Produktdaten (6), **dadurch gekennzeichnet, dass** das Fertigungssteuerungssystem wenigsens eine Ontologieeinheit aufweist, über welche proprietäre Datenmodelle der herstellerspezifischen Module verknüpft sind, dass als Einzel-Ontologieeinheiten eine Ontologieeinheit in Form einer Ressourcen-Einheit (2), welche zur Generierung von Fertigungsabläufen definierenden Daten ausgebildet ist, eine Ontologieeinheit in Form einer Prozess-Einheit (3), welche zur Programmierung von Fertigungs- und/oder Logistikeinheiten ausgebildet ist, und eine Ontologieeinheit in Form einer Produkt-Einheit (4), welche zur Verarbeitung von Produktdaten (6) ausgebildet ist, vorgesehen sind, und dass als Ontologieeinheit eine übergeordnete Ontologieeinheit vorgesehen ist, welche eine Steuerlogik (11) für die Einzel-Ontologieeinheit ausbildet.

## Claims

1. Production control system (1) with an arrangement for manufacturer-specific modules, comprising a module for control of production units, a module for control of logistical units and/or a module for providing and/or processing product data (6), **characterised in that** the production control system comprises at least one ontology unit, by way of which proprietary data models of the manufacturer-specific module are linked, that provided as individual ontology units are an ontology unit in the form of a resources unit (2) configured for generation of data defining production sequences, an ontology unit in the form of a process unit (3) configured for programming production and/or logistical units and an ontology unit in the form a product unit (4) configured for processing product data (6), and that a superordinate ontology unit which forms a control logic (11) for the individual ontology units is provided as ontology unit.

2. Production control system (1) according to claim 1, **characterised in that** provided in the ontology unit are class structures which form ontologies and which comprise classes constructed hierarchically or in assemblages, by means of which classes a semantic linking of the proprietary data model can be performed.

3. Production control system (1) according to claim 2, **characterised in that** the semantic linking of the proprietary data models is configurable.

4. Production control system (1) according to one of claims 2 and 3, **characterised in that** the ontology unit comprises a predetermined number of inference units by means of which classes of ontologies can be linked.

5. Production control system (1) according to claim 4, **characterised in that** the inference units form interface units for different proprietary data models.

6. Production control system (1) according to any one of claims 2 to 5, **characterised in that** the ontologies are described by means of a standard protocol in the form of an RDF (Resource Description Framework).

7. Production control system (1) according to any one of claims 1 to 6, **characterised in that** a normalisation layer (14) is provided, in which instructions able to be realised from data of ontology units are generated.

8. Production control system (1) according to any one of claims 1 to 7, **characterised in that** this is incorporated in a cloud computer network.

9. Method for production control with an arrangement of manufacturer-specific modules, comprising a module for control of production units, a module for control of logistical units and/or a module for providing and/or processing product data (6), **characterised in that** the production control system comprises at least one ontology unit by way of which proprietary data models of the manufacturer-specific module are linked, that provided as individual ontology units are an ontology unit in the form of a resources unit (2) configured for generating data defining production sequences, an ontology unit in the form of a process unit (3) configured for programming production and/or logistical units and an ontology unit in the form of a product unit (4) configured for processing product data (6) and that a superordinate ontology unit which forms a control logic (11) for the individual ontology units is provided as ontology unit.

## Revendications

1. Système (1) de commande de fabrication comportant un ensemble de modules spécifiques de fabricants, incluant des modules dévolus à la commande d'unités de fabrication, des modules dévolus à la commande d'unités de logistique et/ou des modules destinés à fournir et/ou à traiter des données (6) de produits, **caractérisé par le fait que** ledit système de commande de fabrication est muni d'au moins une unité d'ontologie par l'intermédiaire de laquelle des modèles de données propriétaires des modules spécifiques des fabricants sont combinés ; **par le fait qu'**une unité d'ontologie revêtant la forme d'une unité de ressources (2) conçue pour engendrer des données définissant des processus de fabrication, une unité d'ontologie revêtant la forme d'une unité de processus (3) conçue pour programmer des unités de fabrication et/ou de logistique, et une unité d'ontologie revêtant la forme d'une unité (4) de produits conçue pour traiter des données (6) de produits, sont prévues en tant qu'unités individuelles d'ontologie ; et **par le fait qu'**une unité d'ontologie de niveau supérieur, constituant une logique de commande (11) dévolue auxdites unités individuelles d'ontologie, est prévue en tant qu'unité d'ontologie.

2. Système (1) de commande de fabrication selon la revendication 1, **caractérisé par le fait que** des structures de classes formant des ontologies, prévues dans l'unité d'ontologie, comportent des classes structurées hiérarchiquement ou en associations, au moyen desquelles une mise en réseau sémantique des modèles de données propriétaires peut être effectuée.

3. Système (1) de commande de fabrication selon la revendication 2, **caractérisé par le fait que** la mise en réseau sémantique des modèles de données propriétaires peut être configurée.

4. Système (1) de commande de fabrication selon l'une des revendications 2 ou 3, **caractérisé par le fait que** l'unité d'ontologie compte un nombre préétabli d'unités d'interférence au moyen desquelles des classes ontologiques peuvent être combinées.

5. Système (1) de commande de fabrication selon la revendication 4, **caractérisé par le fait que** les unités d'interférence constituent des unités d'interface affectées à différents modèles de données propriétaires.

6. Système (1) de commande de fabrication selon l'une des revendications 2 à 5, **caractérisé par le fait que** les ontologies sont décrites au moyen d'un protocole standard revêtant la forme d'un RDF *(Resource Description Framework).*

7. Système (1) de commande de fabrication selon l'une des revendications 1 à 6, **caractérisé par le fait qu'**il est prévu une couche de normalisation (14) dans laquelle sont engendrées des instructions exécutables à partir de données d'unités d'ontologie.

8. Système (1) de commande de fabrication selon l'une des revendications 1 à 7, **caractérisé par le fait que** ce dernier est intégré dans un réseau informatique en nuage.

9. Procédé de commande de fabrication comportant un ensemble de modules spécifiques de fabricants, incluant des modules dévolus à la commande d'unités de fabrication, des modules dévolus à la commande d'unités de logistique et/ou des modules destinés à fournir et/ou à traiter des données (6) de produits, **caractérisé par le fait que** le système de commande de fabrication est muni d'au moins une unité d'ontologie par l'intermédiaire de laquelle des modèles de données propriétaires des modules spécifiques des fabricants sont combinés ; **par le fait qu'**une unité d'ontologie revêtant la forme d'une unité de ressources (2) conçue pour engendrer des données définissant des processus de fabrication, une unité d'ontologie revêtant la forme d'une unité de processus (3) conçue pour programmer des unités de fabrication et/ou de logistique, et une unité d'ontologie revêtant la forme d'une unité (4) de produits conçue pour traiter des données (6) de produits, sont prévues en tant qu'unités individuelles d'ontologie ; et **par le fait qu'**une unité d'ontologie de niveau supérieur, constituant une logique de commande (11) dévolue auxdites unités individuelles d'ontologie, est prévue en tant qu'unité d'ontologie.
